# EUROPEAN PATENT APPLICATION

(11) **EP 2 299 610 A1**
(43) Date of publication of application: **23.03.2011**
(21) Application number: 09305871.7
(22) Date of filing: 18.09.2009
(51) Int. Cl.: H04B 10/12, H04W 92/12

(54) **Method of exchanging information in a network of stations through optical fibers, network of stations, receiving part and base station**

(71) Applicant: Alcatel Lucent, 75008 Paris (FR)
(72) Inventor: Pfeiffer, Thomas, 70569 Stuttgart (DE); Krimmel, Heinz, 70825 Korntal-Muenchingen (DE); Doll, Mark, 70469 Stuttgart (DE)
(74) Representative: Brose, Gerhard

(57) **Abstract**

The invention relates to a method of exchanging information in a network of stations (BS0, BS1, BS2, BSn) especially in a control network underlying a network of base stations of a cellular radio network, in which information originating in the sphere (e.g. antenna or antennas) of either of the stations (BS0) is sent as broadcast to a couple of those stations (BS1, BS2, BSn) that may need such data for their own processing of information, and that each of these stations (BS1, ES2, BSn) itself selects the information it needs, to a network of stations, to a receiving part and to a base station.

## Description

The invention relates to a method of exchanging information in a network of stations, especially in a control network underlying a network of base stations of a cellular radio network, according to the preamble of claim 1, to a network of stations according to the preamble of claim 7, to a receiving part according to the preamble of claim 8, and to a base station of a cellular radio network according to the preamble of claim 10.

The problem arose related to base stations in cellular radio networks, but could arise in relation to other kinds of stations too, where then of course the same solution could be used. In the following both, problem as well as solution, will be described in terms of such base stations.

Neighboring base stations in cellular radio networks exchange large bulks of information, conventionally via optical data links. To reach short response times, the stations in principle are fully meshed, what means that each such station is directly linked to each other station (or at least to its nearest stations).

The problem is that each such base station needs input from neighboring stations. Retrieving such input information from the respective other base stations by known polling techniques is cumbersome and time consuming. corresponding problems may arise in other situations, where couples of stations cooperate.

Such information may be raw data like a digitized part of an input signal received at an antenna, it may be the data received therefrom by demodulating such signal, it may be data obtained by evaluating feedback from mobile stations, it may be data obtained by joint processing own intonation and information from other base stations or the like.

In other situations the data may include environmental measuring values or statistical data.

In case of base stations first of all the excess delay is to be mentioned, which is detrimental in such applications, as well as requires massive switching and routing power originating from the high information rates involved here. In addition many receivers were needed to form fully meshed networks.

This problem according to the invention is solved by a method according to the teaching of claim 1, a network of stations according to the teaching of claim 7, a receiving part according to the teaching of claim 8, and a base station of a cellular radio network according to the teaching of claim 10.

This means, that the information intended for all neighboring stations is multiplexed into a broadcast and sent to each such station, and that each of these stations itself selects the information it needs.

Further embodiments of the invention are to be found in the subclaims and in the following description.

In the following the invention will be described with the aid of the accompanying drawings, in which:
- Figure 1: shows a part of a control network underlying a net- work of base stations of a cellular radio network, in which a method according to the invention can be ap- plied.
- Figure 2: shows a part of a cellular radio network, in which a method according to the invention can be applied.
- Figure 3: shows a prior art base station and its connections to neighboring base stations.
- Figure 4: shows the situation of figure 2 with a base station implemented as a station according to the invention, operated pursuant to a method according to the inven- tions.
- Figure 5: shows the situation of figure 3, indicating optical wavelengths, and electrical carriers as the used op- erating parameters.
- Figure 6: shows the optical part of a base station as an em- bodiment of a station according to the invention.
- Figure 7: shows a receiving part of an optical interface ac- cording to the invention.
- Figure 8: shows a raw block diagram of a base station of a cel- lular radio network according to the invention.

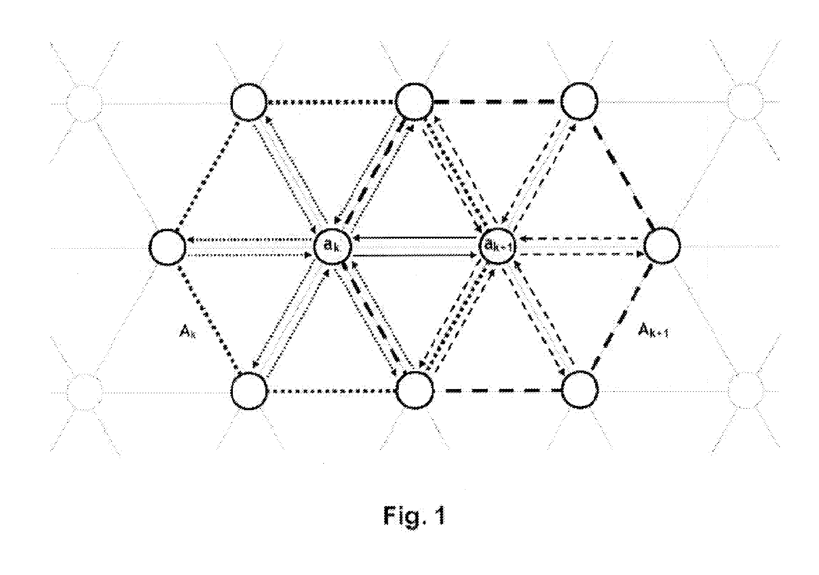

Based on figure 1 the starting point of this invention is described:
cellular radio networks mostly ars illustrated as having a topology of regular hexagons, in the middle of which a base station each is situated. A control network connecting such network of base stations then also has the topology of regular hexagons, as in figure 1.

Practically such networks not only deviate therefrom in the form of the topology and in the number of neighboring stations, but also in the fact, that, defending on the actual need, there might be neighboring stations that are not directly connected and others might be directly connected without being neighbors.

A control network underlying such network of base stations of a cellular radio network is arranged in clusters with a center station and a couple of surrounding stations each. One such cluster is shown as a dotted hexagon Aₖ with a center station aₖ. An other such cluster is shown as dashed hexagon Aₖ₊₁ with a center station aₖ₊₁. The corners of these hexagons also carry base stations. Center station aₖ is connected in both directions to each of its surrounding (neighboring) stations on the dotted hexagon Aₓ by links depicted as dotted arrows; center station aₖ₊₁ is connected in both directions to each of its surrounding (neighboring) stations on the dashed hexagon Aₖ₊₁ by links depicted as dashed arrows. Stations aₖ and aₖ₊₁ both are center stations in their own cluster and surrounding (neighboring) stations in the respective other cluster. The connecting links are depicted as drawn through arrows. As the structure of such control, network is like the structure of a cellular radio network itself, principles, relating to the used resources like frequency reuse may be adopted by using resources in a recurring way.

Please note that the denominations of the elements in this figure depart from the respective denominations in the following figures.

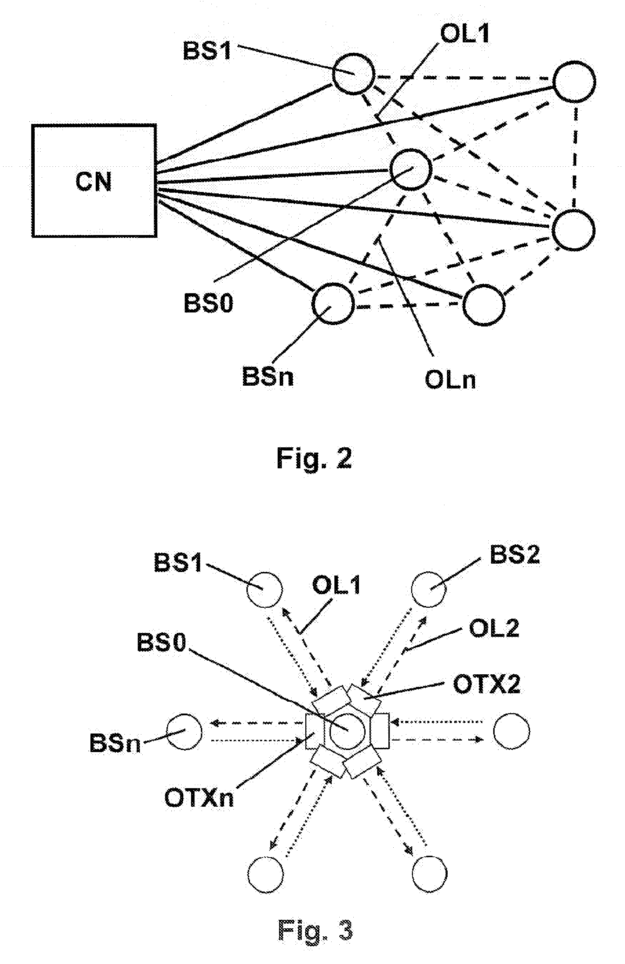

Figure 2 shows a central node CN, a base station BS0, and several other base stations BS1 to BSn. From the other base stations only BS1 and BSn are labeled.

All these base stations BS0 to BSn are directly linked to the central node CN via optical links shewn drawn, through, but not labeled. They are in part directly linked to one another via optical links shown in dashed lines; only the optical links linking base station BS0 with base stations BS1 and BSn are labeled as OL1 and OLn respectively.

In principle all neighboring base stations are directly linked, but even this principle might be breached depending on the actual situation, e.g.. when there is no road link between two neighboring radio cells. But this is not an aspect of the present invention.

Base stations not neighboring, like BS1 and BSn in this example, are not directly linked, but could be linked nevertheless, if requested.

Figure 3 shows the well known equipment for performing such information exchange. The considered base station BS0 is surrounded by its neighboring base stations BS1 to BSn; not all are labeled here. As optical interfaces towards its neighbors base station BS0 is using optical transceivers OTX1 to OTXn; labeled are OTX2 and OTXn. Optical link pairs OL1 to OLn link the considered base station BS0 to its neighboring base stations Bs1 to Bsn. The links leaving base station BS0 are shown with dashed lines, the links arriving therefrom are shown with dotted lines. It is irrelevant here and in the following, whether the link pairs use separate or common optical fibers for the both directions.

In any case the complexity of the interfacing towards the other base stations is high.

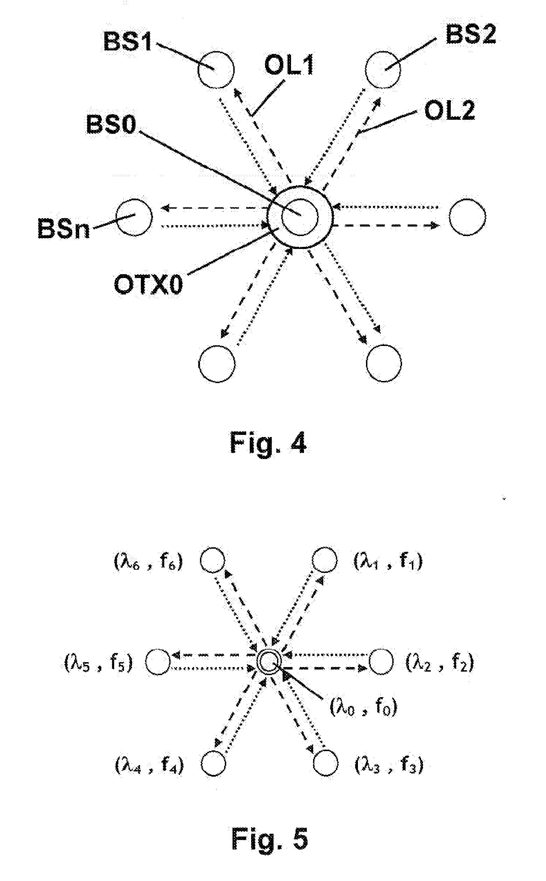

According to the example shown in figure. 4, base station BS0 is equipped with only one optical transceiver OTX0. The remainder of the example in figure 4 is the same as that of figure 3. This implies, that all information to be sent to all other base stations BS1, BS2, ..., BSn is combined to a broadcast and that such broadcast is sent to all other neighboring base stations BS1, BS2, ..., BSn. This further implies that the optical signal resulting from such broadcast has to be optically split into identical optical, signals of which each one is fed to one each of the other base stations BS1, BS2, ..., BSn,

When not only the transmit part of the optical transceiver OTX0 is common to all signals going to all other base stations BS1, BS2, ..., BSn, but also the receive part is common, than not only the incoming signals (dotted links) have to be optically combined, but at the transmit side of the other base stations measures have to be taken, that the signals differ in such a way, that the contributions from the individual other base stations BS1, BS2, ..., BSn can be unambiguously separated at base station BS0.

The invention therefor suggests for such conditions (also the receive part is common) to separate the different broadcasts in the electrical area by causing them in whatever way to be orthogonal. The most common way of forcing data streams or the like to be orthogonal is by modulating them onto different electrical carriers, that is by using different frequencies, commonly known as frequency multiplexing. Any kind of modulation scheme may be used, it is expected to prefer QAM (quadrature amplitude modulation). Instead of using single electrical carriers each the use of sets of subcarriers as known from the OFDM technique (OFDM = Orthogonal Frequency Division Multiplex) may be used as well. Modulation using different orthogonal codes in itself would make the multiplexed information orthogonal, but is not suggested to be used here.

When separating the different broadcasts in the electrical area there is principally no need to also separate them in the optical area by using and especially by separating such different wavelengths at the receive side. There would also not be a need to exactly adjust such wavelengths. But in using exactly the same wavelength a superposition of two signals would result. Even making use of the statistical variation in the manufacturing process of lasers different aging and temperature effects would have to be encountered what would mean, that at least sometimes such wavelengths would be practically identical.

In processing such superposition of two signals a cross modulation could not be avoided. This on the one hand would result in reduction of the useful signals and on the other hand would result in additional disturbing signals. Such disturbing signals could fall in the bands used by useful signals.

Therefore it is suggested, to in addition use separate optical carriers, that is to use different wavelengths for the different broadcasts. Thus each base station would use its own combination of electrical and optical carrier or of electrical frequency and optical wavelength. Such example is shown in figure 5.

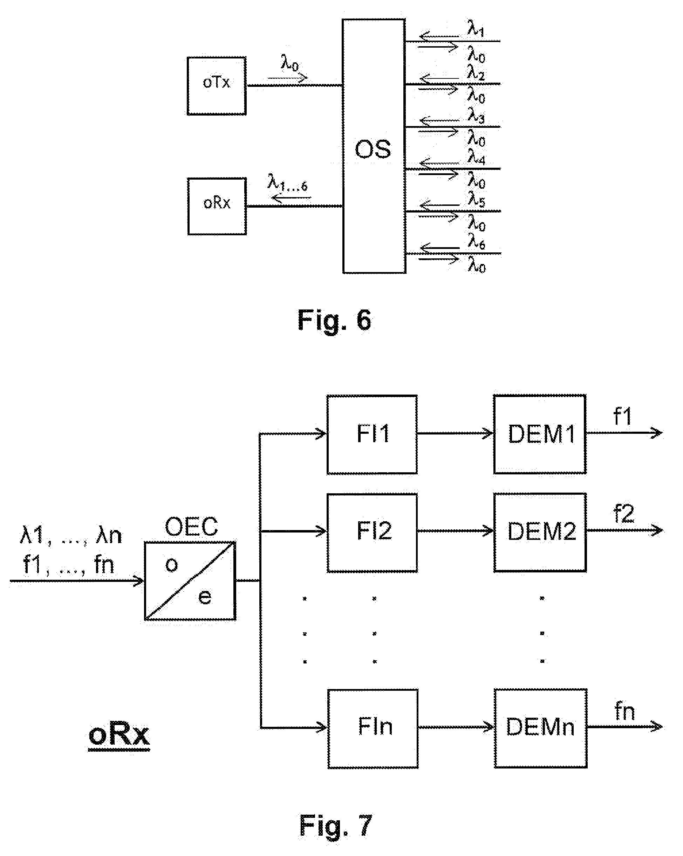

Assuming that we use only single fibers as links for both directions between either of the base stations, an optical interface as shown, in figure 6 is used between the base station and the links. An optical splitter OS combines and splits links coming from an optical transmitter oTx and going to an optical receiver oRx in the base station and combines and splits the optical fibers to and from the neighboring base stations. Such optical splitter OS would also direct the combined incoming signals to the optical transmitter oTx, but this does not disturb, apart from the power loss. Alternatively, this could be circumvented by inserting a suitable optical bandpass filter that blocks all alien wavelength signals.

An incoming signal with a couple of incoming broadcasts with wavelength-frequency-pairs 1-f1 to n-fn is fed to the input of an opto-electronic converter OEC. The electrical output signal thereof is branched into at least two parallel branches, one for each of ths wavelength-frequency-pairs 1-f1 to n-fn. Each such branch filters out one of the frequency bands f1 to fn in a filter FI1 to FIn and demodulates the thus obtained signal in a demodulator DEM1 to DEMn.

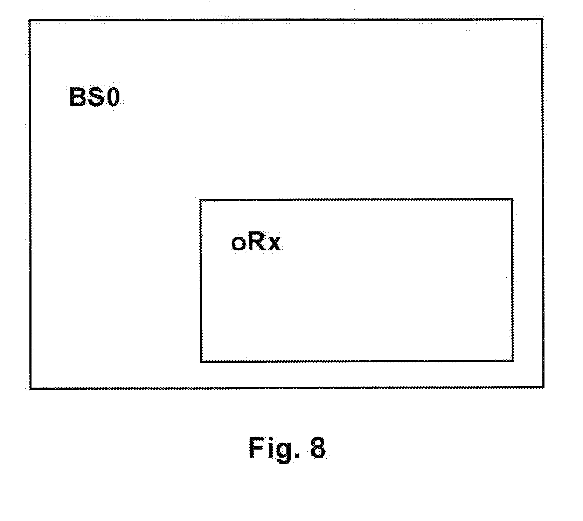

Thus a base station according to the invention, like the base station BS0 of a cellular radio network includes a receiving part oRx as described with reference, to figure 7. This is shown in figure 8.

## Claims

1. Method of exchanging information in a network of stations, especially in a control network underlying a network of base stations of a cellular radio network, **characterised in, that** information originating in the sphere (e.g. antenna or antennas) of either of the stations is sent as broadcast to a couple of those stations that may need such data for their own processing of information, and that each of these stations itself selects the information it needs.

2. Method according to claim 1, **characterized in, that** all such broadcasts are orthogonal with respect to one another in the sense that wherever at least two broadcasts are received at one and the same station within the network, the superposition of such broadcasts includes the information Of either of such broadcasts in an unambiguously retrievable manner.

3. Method according to claim 2, **characterized in, that** the stations are arranged in clusters with a center station and at couple of surrounding stations each, where each center station of one cluster is surrounding station of at least one other cluster, and where the clusters use the resources used for ensuring orthogonality in a recurring way,

4. Method according to claim 1, **characterized in, that** the broadcast of information for a couple of other stations (BS1, BS2, BSn) is modulated onto an electrical carrier (f0) or a set of electrical carriers, and split (OS) into several identical signals, of which each one is fed to one each of the several other stations (BS1, BS2, BSn).

5. Method according to claims 3 and 4, **characterized in, that** each station (BS0) within a cluster of stations (BS1, BS2, BSn) use different electrical carriers (f0, ..., f6) or sets of carriers.

6. Method according to claim 4, **characterized in, that** to each electrical carrier (f0) or set of electrical carriers an optical carrier (λ0, ..., λ6) is assigned and that respective broadcasts are modulated onto such optical carrier.

7. Network of stations, especially a control network underlying a network of base stations of a cellular radio network, **characterized in, that** the network is configured such that, when in operation, it operates according to the method of any of claims 1 to 6.

8. Receiving part (oRx) of an optical interface with an opto-electronic converter (OEC) for receiving a superposition of different broadcasts, **characterized in, that** downstream of the opto-electronic converter (OEC) receiving equipment is arranged and configured such that the different broadcasts are separated and the information contained therein is made accessible separately.

9. Receiving part according to claim 8, **characterized in, that** at least two receiving units (FI1, DEM1; FI2, DEM2; FIn, DEMn) are arranged such that one modulated broadcast each is filtered out (FI1, FI2, FIn) and the thus obtained signal is demodulated (DEM1, DEM2, DEMn).

10. Base station (BSO) of a cellular radio network (Fig. 1), **characterized in, that** it includes a receiving part (oRx) according to claim 8.

## Amended claims

### Amended claims in accordance with Rule 137(2) EPC.

**1.** Method of exchanging information in a network of stations, especially in a control network underlying a network of base stations of a cellular radio network, where information originating in the sphere (e.g. antenna or antennas) of either of the stations is sent as broadcast to a couple of those stations that may need such data, **characterized in, that** each of these stations itself selects the information it needs for its own processing of information.

**8.** Base station (BS0) of a cellular radio network (Fig. 1), **characterized in, that** it is configured such that when connected together with a number of like base stations (BS1, ..., BSn) this base station (BS0) together with the other base stations (BS1, ..., BSn) forms a network of stations according to claim 7.
